# EUROPÄISCHE PATENTSCHRIFT

(11) **EP 3 775 588 B1**
(45) Veröffentlichungstag und Bekanntmachung des Hinweises auf die Patenterteilung: **19.01.2022**
(21) Anmeldenummer: 19721518.9
(22) Anmeldetag: 26.03.2019
(51) Int. Cl.: F16C 17/24, F16C 41/00, F03D 80/70, F03D 15/00, F03D 17/00

(54) **VERFAHREN ZUR BESTIMMUNG DES VERSCHLEISSES EINES IN EINEM WINDKRAFTANLAGENGETRIEBE ANGEORDNETEN GLEITLAGERS, SOWIE WINDKRAFTANLAGENGETRIEBE**
METHOD FOR DETERMINING THE WEAR OF A SLIDING BEARING MOUNTED IN A WIND TURBINE TRANSMISSION, AND WIND TURBINE TRANSMISSION
PROCÉDÉ DE DÉTERMINATION DE L'USURE D'UN PALIER LISSE DISPOSÉ DANS UN ENGRENAGE D'ÉOLIENNE ET ENGRENAGE D'ÉOLIENNE

(30) Priorität: 27.03.2018 DE 102018002509
(43) Veröffentlichungstag der Anmeldung: 17.02.2021
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2019/060103
(87) Internationale Veröffentlichungsnummer: WO 2019/183654

(56) Entgegenhaltungen:
- EP-A1- 1 602 842
- EP-A1- 2 796 740
- DE-A1-102005 056 983
- DE-A1-102016 106 112
- DE-U1-202007 002 609

## Beschreibung

Die Erfindung betrifft ein Verfahren zur Bestimmung des Verschleißes eines in einem Windkraftanlagengetriebe angeordneten Gleitlagers, sowie ein mit einer Verschleißmessung ausgestattetes Windkraftanlagengetriebe.

Aus der EP 1 544 504 A2 oder der AT 509 624 A1 sind Windkraftanlagengetriebe in Form von Platengetrieben bekannt. Als Gleitlager werden dabei üblicherweise Gleitlagerbüchsen verwendet, die auf die Achse aufgeschrumpft oder in das Planetenrad eingepresst sind. Zur Überwachung des Verschleißzustandes der Gleitlager müssen diese ausgebaut werden, was mit großem Aufwand und auch mit hohen Kosten verbunden ist.

Die DE 20 2007 002 609 U1 offenbart ein Verfahren zum Messen eines axialen Lagerspiels eines mittels Axialgleitlager gelagerten Zahnrades.

Aufgabe der vorliegenden Erfindung war es, die Nachteile des Standes der Technik zu überwinden und ein Verfahren, sowie eine Vorrichtung zur Verfügung zu stellen, mittels derer der Verschleißzustand der Lager vereinfacht ermittelt werden kann.

Diese Aufgabe wird durch ein Verfahren und ein Windkraftanlagengetriebe gemäß den Ansprüchen gelöst.

Erfindungsgemäß ist ein Verfahren zur Bestimmung des Verschleißes eines in einem Windkraftanlagengetriebe, insbesondere einem Planetengetriebe, angeordneten Gleitlagers, welches zur Lagerung eines Getriebeteils dient, vorgesehen. Mittels einem im Windkraftanlagengetriebe angeordneten Abstandsensor wird eine radiale Verschiebung der Position des mittels dem Gleitlager gelagerten Getriebeteils erfasst.

Insbesondere kann der zumindest eine Abstandsensor zur Erfassung der radialen Verschiebung der Position des Getriebeteils dienen.

In einer weiteren Ausführungsvariante kann auch vorgesehen sein, dass das Getriebeteil mit zwei Abstandsensoren ausgestattet wird und somit auch die Verkippung des Getriebeteils erfasst werden kann. Hierbei können die beiden Abstandsensoren bezüglich der Längsrichtung der Achse des Getriebeteils zueinander versetzt angeordnet sein, um über die unterschiedliche Verschiebung an den beiden Abstandsensoren die Verkippung berechnen zu können.

Das erfindungsgemäße Verfahren bietet den Vorteil, dass mittels dem Abstandsensor bzw. durch die vom Abstandsensor ermittelten Werte auf einen Verschleiß des Gleitlagers geschlossen werden kann. Somit muss die Windkraftanlage nicht angehalten werden, um den aktuellen Verschleißzustand der Gleitlager im Windkraftanlagengetriebe ermitteln zu können. Dadurch kann ein kompliziertes und kostenintensives Zerlegen des Getriebes, welches zur Überwachung des Verschleißzustandes dient, vermieden werden. Insbesondere kann durch das erfindungsgemäße Verfahren ein plötzlich auftretender übermäßiger Verschleiß erfasst werden und die Ursachen dafür zeitnah abgeklärt werden. Das Verfahren bringt darüber hinaus den Vorteil mit sich, dass die Gleitlager bis zu ihrer maximalen Verschleißgrenze im Einsatz bleiben können, wodurch die Reparaturintervalle und auch die Wartungsintervalle des Windkraftanlagengetriebes gegenüber herkömmlichen Windkraftanlagengetrieben verlängert werden können. Dies ist insbesondere von Vorteil, da jede Stillstandzeit der Windkraftanlage Energieinbußen und somit auch wirtschaftliche Einbußen mit sich führt.

Weiters kann es zweckmäßig sein, wenn der Abstandsensor die Verschiebung des Getriebeteils in periodischen Abständen erfasst und die gemessenen Werte in einer Verschleißtabelle gespeichert werden. Diese Maßnahme bringt den Vorteil mit sich, dass der zeitliche Verlauf des Verschleißes des Gleitlagers dokumentiert bzw. abgelesen werden kann. Durch diese Maßnahme kann eine notwendige Wartung ausreichend im Voraus geplant werden.

Ferner kann vorgesehen sein, dass für die radiale Verschiebung Sollwerte mit Toleranzbereichen für einen bestimmten Erfassungszeitpunkt vorgegeben sind und die mittels dem Abstandsensor erfassten Istwerte mit diesen Sollwerten verglichen werden, wobei eine Aktion ausgelöst wird, wenn ein Istwert außerhalb des Toleranzbereiches eines zugeordneten Sollwertes liegt. Durch diese Maßnahme kann beispielsweise ein Warnsignal an das Wartungspersonal ausgegeben werden, sodass eine Wartung eingetaktet werden kann.

Erfindungsgemäß ist ein Windkraftanlagengetriebe, insbesondere Planetengetriebe, mit zumindest einem Gleitlager zur Lagerung eines Getriebeteils vorgesehen. Ein Verschleißsensor ist in Form eines Abstandsensors zur Erfassung einer radialen Verschiebung der Position des mittels dem Gleitlager gelagerten Getriebeteils ausgebildet.

Die Funktion des Abstandsensors ist in diesem Dokument anhand eines Planetengetriebes beschrieben. Bei Verwendung des Abstandsensors in einem Planetengetriebe kann es notwendig sein, dass der Abstandsensor mit dem Planetenrad mitgedreht wird. Hierbei kann ein drahtloses Datenübertragungssystem zur Übertragung der Daten des Abstandsensors an eine außerhalb des Getriebes liegende Empfangsstation notwendig sein.

Natürlich ist es auch denkbar, dass der Abstandsensor zur Verschleißbestimmung in einer Stirnradstufen-Lagerung eingesetzt wird.

Das erfindungsgemäße Windkraftanlagengetriebe weist den Vorteil auf, dass mittels dem Abstandsensor der Verschleiß der Gleitlagerung erfasst werden kann.

Vorteilhaft ist auch eine Ausprägung, gemäß welcher vorgesehen sein kann, dass der Abstandsensor an einem Planetenradträger angeordnet ist und zur Erfassung der radialen Verschiebung der Position einer Planetenradachse ausgebildet ist, insbesondere dass der Abstandsensor in tangentialer Richtung den Abstand erfassend am Planetenradträger angeordnet ist. Durch diese Maßnahme können die einzelnen Gleitlager, welche zur Lagerung der Planetenradachse dienen, mittels dem Abstandssensor erfasst werden. Die Anordnung des Abstandsensors in tangentialer Richtung am Planetenradträger bringt den Vorteil mit sich, dass eine radiale Verschiebung der Planetenradachse in tangentialer Richtung des Planetenradträgers direkt erfasst werden kann. Da die über die Planetenradachse wirkenden Kräfte auf das Gleitlager auch hauptsächlich in tangentialer Richtung des Planetenradträgers wirken, kann somit die Verschiebung der Planetenradachse direkt in Hauptverschleißrichtung ermittelt werden.

Gemäß einer Weiterbildung ist es möglich, dass im Planetengetriebe ein Dauermagnet derart angeordnet ist, dass der Abstandsensor, welcher sich mitdrehend am Planetenradträger angeordnet ist, mittels Induktion mit Strom versorgt oder aufgeladen werden kann. Durch diese Maßnahme kann eine Energieversorgung des Abstandsensors erreicht werden.

Ferner kann es zweckmäßig sein, wenn ein Lasersensor als Abstandsensor ausgebildet ist. Dies bringt den Vorteil mit sich, dass ein Lasersensor eine hohe Erfassungsgenauigkeit aufweisen kann und darüber hinaus einfach aufgebaut sein kann.

Darüber hinaus kann vorgesehen sein, dass am Getriebeteil eine Markierung angeordnet ist, welche als Referenz für den Abstandsensor dient, insbesondere dass die Markierung als Reflektorpunkt ausgebildet ist, welcher an der Planetenradachse angeordnet ist. Durch diese Maßnahme kann die Erfassungsgenauigkeit des Abstandsensors erhöht werden.

Insbesondere kann vorgesehen sein, dass die Markierung direkt auf das Getriebeteil aufgeklebt ist.

In einer Alternativvariante kann auch vorgesehen sein, dass im Getriebeteil eine Ausnehmung ausgebildet ist, in welcher die Markierung angeordnet ist.

Weiters kann vorgesehen sein, dass der Abstandsensor am Lagersitz des Gleitlagers angeordnet ist. Somit kann die direkte Verschiebung des Getriebeteils relativ zum Lagersitz erfasst werden.

Gemäß einer besonderen Ausprägung ist es möglich, dass der Abstandsensor derart am Lagersitz angeordnet ist, dass eine radiale Verschiebung der Position des mittels dem Gleitlager gelagerten Getriebeteils in Hauptbelastungsrichtung erfasst werden kann. Durch diese Maßnahme kann der relevante Verschleiß des Gleitlagers erfasst werden.

Insbesondere kann vorgesehen sein, dass der Abstandsensor als Lasersensor ausgebildet ist, wobei der Lasersensor derart im Windkraftanlagengetriebe angeordnet ist, dass ein Laserstrahl des Lasersensors in etwa parallel zur Hauptbelastungsrichtung des Gleitlagers ausgerichtet ist. Als in etwa parallel wird hierbei auch eine Abweichung des Laserstrahls von der Parallelität zur Hauptkraftrichtung von +/- 15° gesehen.

Zum besseren Verständnis der Erfindung wird diese anhand der nachfolgenden Figuren näher erläutert.

Es zeigen jeweils in stark vereinfachter, schematischer Darstellung:
- Fig. 1: eine Windkraftanlage in Seitenansicht;
- Fig. 2: ein Windkraftanlagengetriebe in Form eines Planetengetriebes in einem Halbschnitt;
- Fig. 3: eine Ansicht auf einen Planetenradträger mit daran angeordneten Abstandsensoren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

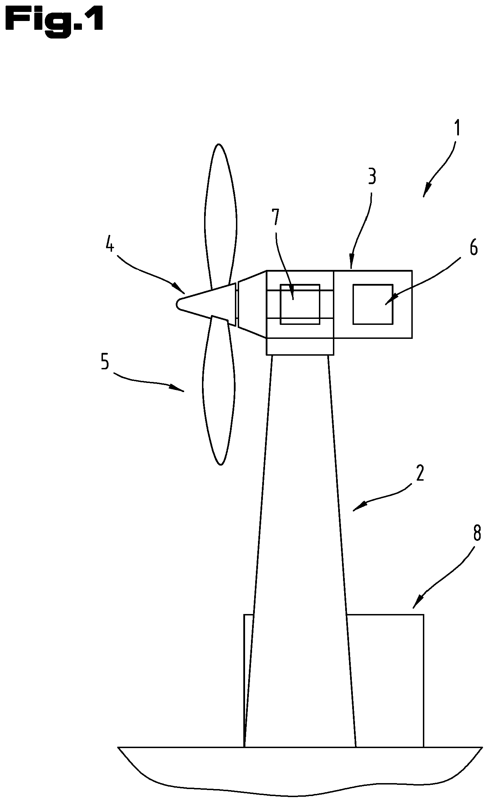

Fig. 1 zeigt eine Windkraftanlage 1. Diese Windkraftanlage 1 entspricht prinzipiell dem Stand der Technik, d.h. sie umfasst einen Turm 2 auf dem eine Gondel 3 angeordnet ist, an deren vorderen Ende ein Rotor 4 mit Rotorblättern 5 und an deren hinterem Ende ein Generator 6 angeordnet ist. Zwischen dem Rotor 4 und dem Generator 6, d.h. einem nicht weiter dargestellten Läufer des Generators, ist ein Windkraftanlagengetriebe 7 angeordnet, das einerseits mit dem Rotor 4 und andererseits dem Läufer des Generators 6 verbunden ist. Das Windkraftanlagengetriebe 7 dient der Erhöhung der Drehzahl des Läufers im Vergleich zum Rotor 4. Am unteren Teil des Turms 2 ist schließlich noch ein Netzanschluss 8 vorhanden.

Da diese Bestandteile prinzipiell aus dem Stand der Technik für Windkraftanlagen 1 bekannt sind, sei an dieser Stelle auf die einschlägige Literatur hierzu verwiesen. Es sei jedoch erwähnt, dass die Windkraftanlage 1 nicht zwingend auf den in Fig. 1 dargestellten Typ beschränkt ist.

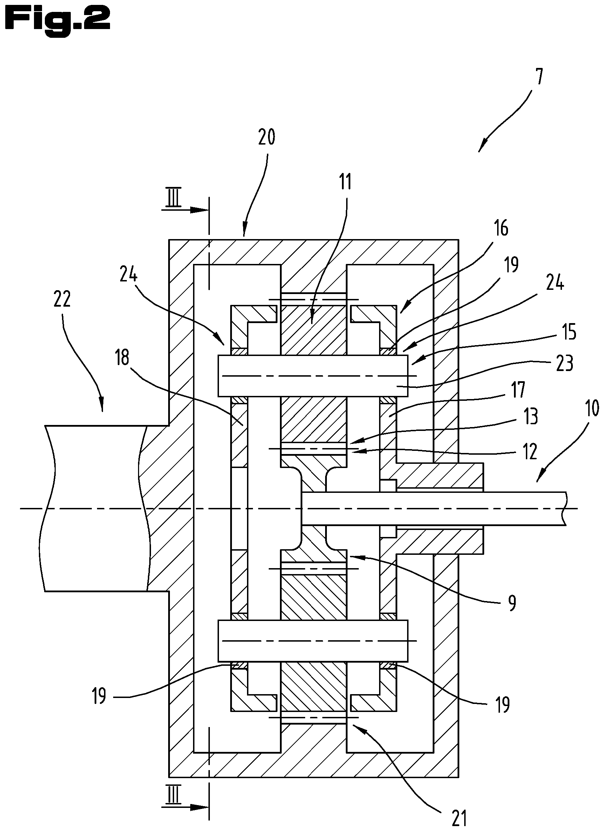

Fig. 2 zeigt ein Ausführungsbeispiel des Windkraftanlagengetriebes 7 in Form eines einfachen Planetengetriebes in Seitenansicht geschnitten.

Das Planetengetriebe 7 weist ein Sonnenrad 9 auf, das mit einer Welle 10, die zum Generatorrotor führt, bewegungsgekoppelt ist. Das Sonnenrad 9 ist von mehreren Planetenrädern 11, beispielsweise zwei, vorzugsweise drei oder vier, umgeben. Sowohl das Sonnenrad 9 als auch die Planetenräder 11 weisen außenliegende Stirnverzahnungen 12, 13 auf, die in kämmenden Eingriff miteinander stehen, wobei diese Stirnverzahnungen 12, 13 in Fig. 2 schematisch dargestellt sind.

Die Planetenräder 11 sind mittels einer Planetenradachse 14 im Planetenträger 15 gelagert, wobei im Planetenträger 15 ein erster Aufnahmeabschnitt 16 und ein zweiter Aufnahmeabschnitt 17 vorgesehen sind. Wie aus Fig. 2 ersichtlich, kann vorgesehen sein, dass die Planetenräder 11 fest mit einer Planetenradachse 14 gekoppelt sind und die Planetenradachsen 14 drehbar in den Aufnahmeabschnitten 16, 17 aufgenommen sind.

Insbesondere kann vorgesehen sein, dass die Planetenradachsen 14 mittels Gleitlagern 19 in den Aufnahmeabschnitten 16, 17 gelagert sind. Die Gleitlager 19 können beispielsweise in Form von Gleitlagerbuchsen ausgebildet sein.

In einem alternativen Ausführungsbeispiel kann vorgesehen sein, dass die Planetenradachsen 14 in den Aufnahmeabschnitten 16, 17 geklemmt sind und die Planetenräder 11 mittels Gleitlagern 19 relativ zu den Planetenradachsen 14 verdrehbar an diesen gelagert sind.

Die Planetenräder 11 umgebend ist ein Hohlrad 20 angeordnet, welches eine Innenverzahnung 21 aufweist, die in kämmendem Eingriff mit der Stirnverzahnung 13 der Planetenräder 11 steht. Das Hohlrad 20 ist mit einer Rotorwelle 22 des Rotors der Windkraftanlage bewegungsgekoppelt. Die Stirnverzahnungen 12, 13 bzw. die Innenverzahnung 21 können als Geradverzahnung, als Schrägverzahnung oder als Doppelschrägverzahnung ausgeführt sein.

Da derartige Planetengetriebe 7 dem Prinzip nach ebenfalls bereits aus dem Stand der Technik bekannt sind, beispielsweise aus dem voranstehend zitierten Dokument zum Stand der Technik, erübrigt sich eine weitere Erörterung an dieser Stelle.

Als Getriebeteil 23 wird in diesem Dokument jener Bauteil bezeichnet, welcher mittels dem Gleitlager 19 relativ zu einem anderen Bauteil, welches als Lagersitz 24 bezeichnet wird, verdrehbar an diesem gelagert ist.

Beispielsweise kann das Planetenrad 11 als Getriebeteil 23 bezeichnet werden, wenn es mittels dem Gleitlager 19 relativ zur Planetenradachse 14 verdrehbar an dieser gelagert ist.

In einem anderen Ausführungsbeispiel kann die Planetenradachse 14 als Getriebeteil 23 bezeichnet werden, wenn sie mittels dem Gleitlager 19 relativ zu den Aufnahmeabschnitten 16 , 17 verdrehbar an diesen gelagert ist.

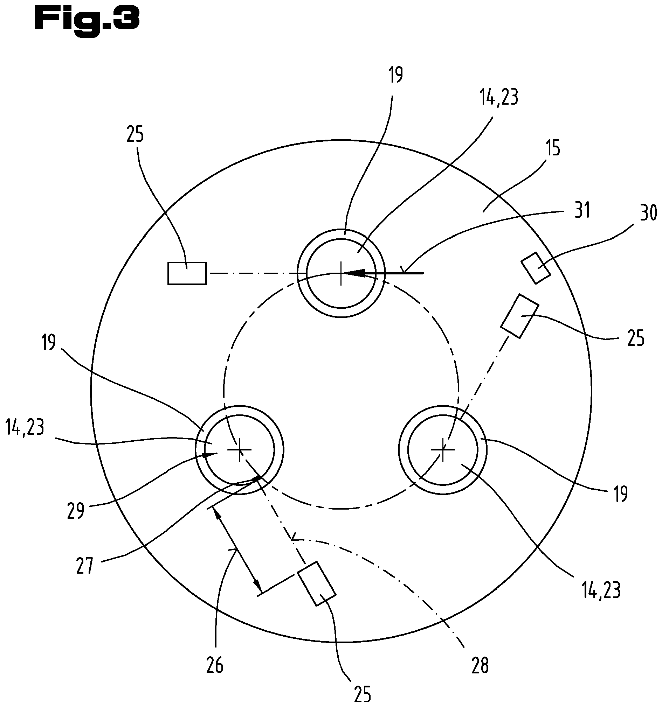

In der Fig. 3 ist eine weitere und gegebenenfalls für sich eigenständige Ausführungsform des Windkraftanlagengetriebes 7 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

In Fig. 3 ist der Planetenträger 15 in einer Frontalansicht gemäß der Ansicht III - III aus Fig. 2 dargestellt.

Wie aus Fig. 3 ersichtlich, kann vorgesehen sein, dass Abstandsensoren 25 ausgebildet sind, welche zur Erfassung der Position bzw. Positionsverschiebung des Getriebeteils 23 dienen. Insbesondere können die Abstandsensoren 25 zur Erfassung der radialen Verschiebung der Position des Getriebeteils 23 dienen. Das Getriebeteil 23 ist in diesem Fall die Planetenradachse 14, welche mittels der Gleitlager 19 drehbar im Planetenträger 15 gelagert ist.

Mittels dem Abstandsensor 25 kann ein Abstand 26 der Oberfläche der Planetenradachse 14 zum Abstandsensor 25 erfasst werden. Die Veränderung des gemessenen Abstandes 26 über die Zeit bringt Aufschluss über den Verschleißzustand des Gleitlagers 19.

Um die Messgenauigkeit zu verbessern, kann vorgesehen sein, dass am Getriebeteil 23 eine Markierung 27 ausgebildet ist, welche mit dem Abstandsensor 25 zusammenwirkt. Im vorliegenden Ausführungsbeispiel nach Fig. 3 ist beispielsweise der Abstandsensor 25 in Form eines Lasersensors ausgebildet und die Markierung 27 in Form eines Reflektors zum Reflektieren eines Laserstrahls 28 des Abstandsensors 25. Der Abstand 26 wird hierbei zwischen dem Abstandsensor 25 und der Oberfläche der Markierung 27 gemessen.

Insbesondere kann der Abstandsensor 25 derart am Planetenträger 15 angeordnet sein, dass der Laserstrahl 28 in tangentialer Richtung auf einen Drehmittelpunktdurchmesser wirkt an welchem die einzelnen Drehmittelpunkte 29 der Planetenradachse 14 angeordnet sind. Da auch die Hauptbelastungsrichtung 31 der Planetenradachsen 14 in Tangentialrichtung zum Drehmittelpunktdurchmesser verläuft, liegt der Laserstrahl 28 somit parallel zur Hauptbelastungsrichtung 31 der Planetenradachsen 14. Somit kann der relevante Verschleiß in Hauptbelastungsrichtung 31 ermittelt werden.

Weiters kann ein oder mehrere Dauermagneten 30 im Hohlrad 20 angeordnet sein, zu welchem sich der Planetenträger 15 verdreht. Durch diese Dauermagneten 30 kann mittels Induktion eine Energieversorgung der Abstandsensoren 25 erreicht werden. Weiters kann vorgesehen sein, dass die Abstandsensoren 25 mit einem kabellosen Signalübertragungsmittel ausgestattet sind, mittels welchem der gemessene Abstand zu einer Empfangsstelle übertragen werden kann.

In einem ersten Ausführungsbeispiel kann, wie in Fig. 3 dargestellt, vorgesehen sein, dass für jede der Planetenradachsen 14 ein eigener Abstandsensor 25 ausgebildet ist. Somit kann der Verschleißzustand jeder der Planetenradachsen 14 zugeordneten Gleitlager 19 überwacht werden.

In einem weiteren, nicht dargestellten Ausführungsbeispiel, kann auch vorgesehen sein, dass nur ein Abstandsensor 25 ausgebildet ist, welcher die Verschiebung einer der Planetenradachsen 14 erfasst und dass davon ausgegangen wird, dass alle Gleitlager der Planetenradachsen 14 einem gleichen Verschleiß unterliegen.

In einem weiteren, nicht dargestellten Ausführungsbeispiel, kann vorgesehen sein, dass die Planetenräder 11 mittels der Gleitlager 19 relativ zu den Planetenradachsen 14 verdrehbar an diesen gelagert sind. Bei einem derartigen Ausführungsbeispiel kann der Abstandsensor 25 beispielsweise direkt die Position bzw. die Verschiebung des Planetenrades 11 erfassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 31 | Hauptbelastungsrichtung |
| 2 | Turm | | |
| 3 | Gondel | | |
| 4 | Rotor | | |
| 5 | Rotorblatt | | |
| 6 | Generator | | |
| 7 | Windkraftanlagengetriebe | | |
| 8 | Netzanschluss | | |
| 9 | Sonnenrad | | |
| 10 | Welle | | |
| 11 | Planetenrad | | |
| 12 | Stirnverzahnung Sonnenrad | | |
| 13 | Stirnverzahnung Planetenrad | | |
| 14 | Planetenradachse | | |
| 15 | Planetenträger | | |
| 16 | erster Aufnahmeabschnitt | | |
| 17 | zweiter Aufnahmeabschnitt | | |
| 18 | Lagersitz | | |
| 19 | Gleitlager | | |
| 20 | Hohlrad | | |
| 21 | Innenverzahnung | | |
| 22 | Rotorwelle | | |
| 23 | Getriebeteil | | |
| 24 | Lagersitz | | |
| 25 | Abstandsensor | | |
| 26 | Abstand | | |
| 27 | Markierung | | |
| 28 | Laserstrahl | | |
| 29 | Drehmittelpunkt | | |
| 30 | Dauermagnet | | |

## Patentansprüche

1. Verfahren zur Bestimmung des Verschleißes eines in einem Windkraftanlagengetriebe (7), insbesondere einem Planetengetriebe, angeordneten Gleitlagers (19), welches zur Lagerung eines Getriebeteils (23) dient, **dadurch gekennzeichnet, dass** mittels zumindest einem Abstandsensor (25), welcher im Windkraftanlagengetriebe (7) angeordnet ist eine radiale Verschiebung der Position des mittels dem Gleitlager (19) gelagerten Getriebeteils (23) erfasst wird.

2. Verfahren nach Anspruch 1, **dadurch gekennzeichnet, dass** der Abstandsensor (25) die Verschiebung des Getriebeteils (23) in periodischen Abständen erfasst und die gemessenen Werte in einer Verschleißtabelle gespeichert werden.

3. Verfahren nach Anspruch 2, **dadurch gekennzeichnet, dass** für die radiale Verschiebung Sollwerte mit Toleranzbereichen für einen bestimmten Erfassungszeitpunkt vorgegeben sind und die mittels dem Abstandsensor (25) erfassten Istwerte mit diesen Sollwerten verglichen werden, wobei eine Aktion ausgelöst wird, wenn ein Istwert außerhalb des Toleranzbereiches eines zugeordneten Sollwertes liegt.

4. Windkraftanlagengetriebe (7), insbesondere Planetengetriebe, mit zumindest einem Gleitlager (19) zur Lagerung eines Getriebeteils (23), **dadurch gekennzeichnet, dass** ein Verschleißsensor in Form eines Abstandsensors (25) zur Erfassung einer radialen Verschiebung der Position des mittels dem Gleitlager (19) gelagerten Getriebeteils (23) ausgebildet ist.

5. Windkraftanlagengetriebe nach Anspruch 4, **dadurch gekennzeichnet, dass** der Abstandsensor (25) an einem Planetenradträger (15) angeordnet ist und zur Erfassung der radialen Verschiebung der Position einer Planetenradachse (14) ausgebildet ist, insbesondere dass der Abstandsensor (25) in tangentialer Richtung den Abstand (26) erfassend am Planetenradträger (15) angeordnet ist.

6. Windkraftanlagengetriebe nach Anspruch 5, **dadurch gekennzeichnet, dass** im Windkraftanlagengetriebe (7) ein Dauermagnet (30) derart angeordnet ist, dass der Abstandsensor (25), welcher sich mitdrehend am Planetenradträger (15) angeordnet ist, mittels Induktion mit Strom versorgt oder aufgeladen werden kann.

7. Windkraftanlagengetriebe nach einem der Ansprüche 4 bis 6, **dadurch gekennzeichnet, dass** ein Lasersensor als Abstandsensor (25) ausgebildet ist.

8. Windkraftanlagengetriebe nach einem der Ansprüche 4 bis 7, **dadurch gekennzeichnet, dass** am Getriebeteil (23) eine Markierung (27) angeordnet ist, welche als Referenz für den Abstandsensor (25) dient, insbesondere dass die Markierung (27) als Reflektorpunkt ausgebildet ist, welcher an der Planetenradachse (14) angeordnet ist.

9. Windkraftanlagengetriebe nach einem der Ansprüche 4 bis 8, **dadurch gekennzeichnet, dass** der Abstandsensor (25) am Lagersitz (24) des Gleitlagers (19) angeordnet ist.

10. Windkraftanlagengetriebe nach einem der Ansprüche 4 bis 9, **dadurch gekennzeichnet, dass** der Abstandsensor (25) derart am Lagersitz (24) angeordnet ist, dass eine radiale Verschiebung der Position des mittels dem Gleitlager (19) gelagerten Getriebeteils (23) in Hauptbelastungsrichtung (31) erfasst werden kann.

## Claims

1. A method for determining the wear of a sliding bearing (19) arranged in a wind turbine gearbox (7), in particular a planetary gearbox, which sliding bearing (19) serves for mounting a gearbox component (23), **characterized in that**, by means of at least one distance sensor (25), which is arranged in the wind turbine gearbox (7), a radial displacement of the position of the gearbox component (23) pivoted by means of the sliding bearing (19) can be detected.

2. The method according to claim 1, **characterized in that** the distance sensor (25) detects the displacement of the gearbox component (23) in periodical intervals, and the measured values are saved in a wear chart.

3. The method according to claim 2, **characterized in that**, for the radial displacement, target values with tolerance ranges are predetermined for a certain time of detection, and the actual values detected by means of the distance sensor (25) are compared with said target values, wherein an action is triggered if an actual value lies outside the tolerance range of an assigned target value.

4. A wind turbine gearbox (7), in particular planetary gearbox, having at least one sliding bearing (19) for mounting a gearbox component (23), **characterized in that** a wear sensor in the form of a distance sensor (25) is formed for detecting a radial displacement of the position of the gearbox component (23) pivoted by means of the sliding bearing (19).

5. The wind turbine gearbox according to claim 4, **characterized in that** the distance sensor (25) is arranged on a planetary gear carrier (15) and is formed for the detection of the radial displacement of the position of a planetary gear axle (14), in particular that the distance sensor (25) is arranged on the planetary gear carrier (15) so as to detect the distance (26) in the tangential direction.

6. The wind turbine gearbox according to claim 5, **characterized in that** a permanent magnet (30) is arranged in the wind turbine gearbox (7) such that the distance sensor (25), which is arranged on the planetary gear carrier (15) so as to rotate along with it, can be supplied or charged with electricity by means of induction.

7. The wind turbine gearbox according to one of claims 4 to 6, **characterized in that** a laser sensor is formed as a distance sensor (25).

8. The wind turbine gearbox according to one of claims 4 to 7, **characterized in that** a marking (27) is arranged on the gearbox component (23), which marking (27) serves as a reference for the distance sensor (25), in particular that the marking (27) is formed as a reflector point which is arranged on the planetary gear axle (14).

9. The wind turbine gearbox according to one of claims 4 to 8, **characterized in that** the distance sensor (25) is arranged on the bearing seat (24) of the sliding bearing (19).

10. The wind turbine gearbox according to one of claims 4 to 9, **characterized in that** the distance sensor (25) is arranged on the bearing seat (24) such that a radial displacement of the position of the gearbox component (23) pivoted by means of the sliding bearing (19) in the main direction of loading (31) can be detected.

## Revendications

1. Procédé pour la détermination de l'usure d'un palier lisse (19), disposé dans une transmission d'éolienne (7), plus particulièrement une transmission planétaire, qui permet le logement d'une partie de transmission (23), **caractérisé en ce que**, au moyen d'au moins un capteur de distance (25), qui est disposé dans la transmission de l'éolienne (7), est mesuré un décalage radial de la position de la partie de transmission (23) logée au moyen du palier lisse (19).

2. Procédé selon la revendication 1, **caractérisé en ce que** le capteur de distance (25) mesure le décalage de la partie de transmission (23) à des intervalles périodiques et enregistre les valeurs mesurées dans une table d'usure.

3. Procédé selon la revendication 2, **caractérisé en ce que**, pour le décalage radial, des valeurs de consigne avec des intervalles de tolérance sont prédéterminées pour un moment de détection déterminé et les valeurs réelles mesurées au moyen du capteur de distance (25) sont comparées avec ces valeurs de consigne, dans lequel une action est déclenchée lorsqu'une valeur réelle se trouve à l'extérieur de l'intervalle de tolérance d'une valeur de consigne correspondante.

4. Transmission d'éolienne (7), plus particulièrement transmission planétaire, avec au moins un palier lisse (19) pour le logement d'une partie de transmission (23), **caractérisée en ce qu'**un capteur d'usure est conçu sous la forme d'un capteur de distance (25) pour la mesure d'un décalage radial de la position de la partie de transmission (23) logée au moyen du palier lisse (19).

5. Transmission d'éolienne selon la revendication 4, **caractérisée en ce que** le capteur de distance (25) est disposé sur un support de roue planétaire (15) et est conçu pour la mesure du décalage radial de la position d'un axe de roue planétaire (14), plus particulièrement **en ce que** le capteur de distance (25) est disposé sur le support de roue planétaire (15) pour mesurer la distance (26) dans la direction tangentielle.

6. Transmission d'éolienne selon la revendication 5, **caractérisée en ce que**, dans la transmission d'éolienne (7) est disposé un aimant permanent (30), de façon à ce que le capteur de distance (25), qui est disposé sur le support de roue planétaire (15) de façon à tourner avec elle, puisse être alimenté ou chargé avec un courant par induction.

7. Transmission d'éolienne selon l'une des revendications 4 à 6, **caractérisée en ce qu'**un capteur laser est conçu comme un capteur de distance (25).

8. Transmission d'éolienne selon l'une des revendications 4 à 7, **caractérisée en ce que**, sur la partie de transmission (23), est disposé un marquage (27), qui sert de référence pour le capteur de distance (25), plus particulièrement **en ce que** le marquage (27) est conçu comme un point réflecteur, qui est disposé sur l'axe de roue planétaire (14).

9. Transmission d'éolienne selon l'une des revendications 4 à 8, **caractérisée en ce que** le capteur de distance (25) est disposé sur le siège de palier (24) du palier lisse (19).

10. Transmission d'éolienne selon l'une des revendications 4 à 9, **caractérisée en ce que** le capteur de distance (25) est disposé sur le siège de palier (24), de façon à ce qu'un décalage axial de la position de la partie de transmission (23) logée au moyen du palier lisse (19) dans la direction de sollicitation principale (31) puisse être mesuré.
